(19) Europäisches Patentamt
European Patent Office
Office européen des brevets

(11) **EP 4 056 268 A1**

(12) **EUROPEAN PATENT APPLICATION**
published in accordance with Art. 153(4) EPC

(43) Date of publication:
**14.09.2022 Bulletin 2022/37**

(21) Application number: **20912145.8**

(22) Date of filing: **04.11.2020**

(51) International Patent Classification (IPC):
**B01J 23/63** (2006.01)    **B01J 23/58** (2006.01)
**B01J 23/96** (2006.01)    **B01J 38/02** (2006.01)
**B01J 38/06** (2006.01)    **C01B 3/40** (2006.01)

(52) Cooperative Patent Classification (CPC):
**B01J 23/58; B01J 23/63; B01J 23/96; B01J 38/02;
B01J 38/06; C01B 3/40;** Y02P 20/52; Y02P 20/584

(86) International application number:
**PCT/JP2020/041148**

(87) International publication number:
**WO 2021/140732 (15.07.2021 Gazette 2021/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.01.2020   JP 2020000922**

(71) Applicant: **Murata Manufacturing Co., Ltd.
Nagaokakyo-shi, Kyoto 617-8555 (JP)**

(72) Inventor: **SATO, Hideto
Nagaokakyo-shi, Kyoto 617-8555 (JP)**

(74) Representative: **Frick, Robert
Lorenz Seidler Gossel
Rechtsanwälte Patentanwälte
Partnerschaft mbB
Widenmayerstraße 23
80538 München (DE)**

(54) **HYDROCARBON REFORMING CATALYST, HYDROCARBON REFORMING DEVICE, AND METHOD FOR REGENERATING HYDROCARBON REFORMING CATALYST POISONED BY SULFUR**

(57)   A catalyst used for forming a synthetic gas containing hydrogen and carbon monoxide from a hydrocarbon-based gas contains a complex oxide having a perovskite structure, wherein the complex oxide has a crystal phase containing $CaZrO_3$ as a primary component and contains Ru.

FIG. 2

**Description**

Technical Field

The present invention relates to a hydrocarbon reforming catalyst used for forming a synthetic gas containing hydrogen and carbon monoxide from a hydrocarbon-based gas, to a hydrocarbon reforming apparatus including the hydrocarbon reforming catalyst, and to a method for recovering the hydrocarbon reforming catalyst deteriorated due to sulfur.

Background Art

In a known method, a synthetic gas containing hydrogen and carbon monoxide is obtained from a hydrocarbon-based gas by using a catalyst. Examples of the known catalyst used for a reforming reaction of the hydrocarbon-based gas include nickel-based catalysts in which nickel is supported by a base substrate such as alumina, ruthenium-based catalysts in which ruthenium is supported (refer to Patent Document 1), and rhodium-based catalysts in which rhodium is supported by a base substrate such as alumina (refer to Patent Document 2).

Further, in known catalysts, rhodium, cobalt, or nickel serving as an active component is supported by a carrier including lanthanum aluminate, strontium titanate, or barium titanate, which are perovskite-type compounds, to suppress carbon from depositing and to improve the activity at low temperature (refer to Patent Document 3).

As a common method for producing a metal-supporting catalyst, an impregnation method in which an active metal is dispersed on the carrier surface by dipping an oxide serving as a carrier into a solution of a metal salt or the like and, thereafter, performing heat treatment is known (Patent Document 1 to Patent Document 3).

In this regard, the carrier component is required to have high heat stability and strength and, therefore, is sufficiently sintered by being subjected to heat treatment at high temperature, while the dispersibility of the supported metal has to be maintained to obtain high activity. Consequently, to minimize aggregation during a heat treatment step, the supported metal is fixed to the carrier under a heat treatment condition at relatively low temperature by using a production step different from the synthesis of the carrier, as in the impregnation method.

The catalyst produced by the impregnation method can maintain high metal dispersibility. However, the impregnation step of supporting the metal component is necessary in addition to the carrier component synthesis step. Further, since the metal component is made to adhere by heat treatment at relatively low temperature, coupling between the metal and the carrier is weak, carbon deposition may cause an activity deterioration problem.

Consequently, as a method for producing a catalyst without using the impregnation step, a method in which a complex oxide containing $BaNiY_2O_5$ is synthesized through solid-phase synthesis so as to improve the dispersibility of a Ni component is proposed (Patent Document 4).

Citation List

Patent Document

  Patent Document 1: Japanese Unexamined Patent Application Publication No. 8-231204
  Patent Document 2: Japanese Unexamined Patent Application Publication No. 9-168740
  Patent Document 3: Japanese Unexamined Patent Application Publication No. 2006-346598
  Patent Document 4: Japanese Unexamined Patent Application Publication No. 2015-136668

Summary of Invention

Technical Problem

The catalyst described in Patent Document 4 can suppress carbon from depositing. However, it cannot be said that the activity is sufficiently high, and there is room for improvement.

The present invention addresses the above-described problem, and it is an object to provide a hydrocarbon reforming catalyst having high activity, to provide a hydrocarbon reforming apparatus including such a hydrocarbon reforming catalyst, and to provide a method for recovering such a hydrocarbon reforming catalyst from deterioration due to sulfur.

Solution to Problem

A hydrocarbon reforming catalyst according to the present invention is a catalyst used for forming a synthetic gas containing hydrogen and carbon monoxide from a hydrocarbon-based gas and

contains a complex oxide having a perovskite structure,
wherein the complex oxide has a crystal phase containing $CaZrO_3$ as a primary component and contains Ru.

Advantageous Effects of Invention

According to the present invention, a hydrocarbon reforming catalyst having high activity, a hydrocarbon reforming apparatus including such a hydrocarbon reforming catalyst, and a method for recovering such a hydrocarbon reforming catalyst from deterioration due to sulfur can be provided.

Brief Description of Drawings

[Fig. 1] Fig. 1 is a diagram illustrating the outline of the configuration of a hydrocarbon reforming apparatus.
[Fig. 2] Fig. 2 is a diagram illustrating X-ray diffraction patterns of the hydrocarbon reforming catalysts of examples 9 and 15 and comparative example 1.

Description of Embodiments

An embodiment according to the present invention will be illustrated below so as to specifically describe the features of the present invention.
The hydrocarbon reforming catalyst according to the present invention is a catalyst used for forming a synthetic gas containing hydrogen and carbon monoxide from a hydrocarbon-based gas and satisfies the requirements, that is, containing a complex oxide having a perovskite structure, wherein the complex oxide has a crystal phase containing $CaZrO_3$ as a primary component and contains Ru (hereafter referred to as requirements of the present invention) .
For example, a propane gas containing propane as a primary component or a natural gas containing methane as a primary component may be used as the hydrocarbon-based gas that is a treatment object gas. In addition, hydrocarbon-based gases obtained by vaporizing liquid hydrocarbons, such as gasoline, kerosene, methanol, and ethanol, may also be used.
The reaction which forms a synthetic gas containing hydrogen and carbon monoxide from a hydrocarbon-based gas will be described with reference to steam reforming of a propane gas as an example. The steam reforming of a propane gas is represented by formula (1) below.

$$C_3H_8 + 3H_2O \rightarrow 7H_2 + 3CO \qquad (1)$$

In this regard, the method for forming a synthetic gas containing hydrogen and carbon monoxide from a hydrocarbon-based gas is not limited to steam reforming. For example, oxygen, carbon dioxide, or a mixture thereof may be contained instead of steam. When carbon dioxide is contained, the reforming reaction is represented by formula (2) below.

$$C_3H_8 + 3CO_2 \rightarrow 4H_2 + 6CO \qquad (2)$$

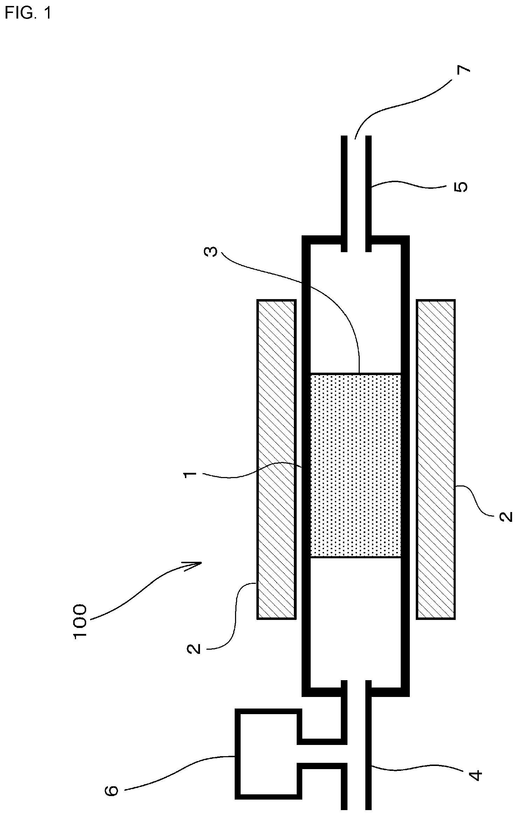

Fig. 1 is a diagram illustrating the outline of the configuration of a hydrocarbon reforming apparatus 100 to form a synthetic gas containing hydrogen and carbon monoxide from a treatment object gas containing at least a hydrocarbon. The hydrocarbon reforming apparatus 100 includes a pipe 1 through which the treatment object gas passes, a heating portion 2 to heat the treatment object gas passing through the pipe 1, and a hydrocarbon reforming catalyst 3 disposed at a position in contact with the treatment object gas inside the pipe 1. The hydrocarbon reforming catalyst 3 is a catalyst that satisfies the requirements of the present invention and contains a complex oxide having a perovskite structure, and the complex oxide has a crystal phase containing $CaZrO_3$ as a primary component and containing Ru. In this regard, when just the treatment object gas is at sufficiently high temperature, the heating portion 2 may be skipped.
A gas feed pipe 4 is coupled to the upstream side of the pipe 1. A hydrocarbon is fed from a hydrocarbon supply source 6 to the gas feed pipe 4. However, the hydrocarbon supply source 6 may be disposed at the former stage of the gas feed pipe 4. In this regard, the hydrocarbon fed from the hydrocarbon supply source 6 may contain other components.

A gas discharge pipe 5 to discharge a synthetic gas containing hydrogen and carbon monoxide obtained through reforming is coupled to the downstream side of the pipe 1. The gas discharge pipe 5 is provided with a hydrogen outlet 7 and is configured to be capable of separating hydrogen contained in the synthetic gas. For example, a CO converter may be disposed in the gas discharge pipe 5 so as to remove carbon monoxide contained in the synthetic gas, and hydrogen may be separated through the hydrogen outlet 7.

(Examples 1 to 8)

Regarding the material for forming the hydrocarbon reforming catalyst, $CaCO_3$, $ZrO_2$, $CeO_2$, $Y_2O_3$, and $RuO_2$ were prepared and weighed so that the molar ratio of Ca:Zr:Ce:Y:Ru was set to be equal to the ratio described in Table 1, and pebbles, water, and a binder were wet-mixed so as to obtain a mixture. The resulting mixture was dried in an oven at a temperature of 120°C and was pulverized and classified so as to have a granular shape with the size of about 2 mm. Thereafter, hydrocarbon reforming catalysts of examples 1 to 8 were obtained by firing the granular sample in air under the conditions of 1,000°C and 1 hour.

The hydrocarbon reforming catalysts of examples 1 to 8 were catalysts satisfying the requirements of the present invention. As described in Table 1, the hydrocarbon reforming catalysts of examples 1 to 4 contained Ca, Zr, Ce, Y, and Ru. The molar ratios of Zr to Ca, the molar ratios of Ce to Ca, and the molar ratios of Y to Ca of the hydrocarbon reforming catalysts of examples 1 to 4 were equal to each other, but the molar ratios of Ru to Ca differed from each other. The molar ratios of Ru to Ca of the hydrocarbon reforming catalysts of examples 5 to 8 were equal to each other, but the molar ratios of Zr, Ce, and Y to Ca differed from each other.

(Examples 9 to 11)

Regarding the material for forming the hydrocarbon reforming catalyst, $CaCO_3$, $ZrO_2$, $CeO_2$, and $RuO_2$ were prepared and weighed so that the molar ratio of Ca:Zr:Ce:Ru was set to be equal to the ratio described in Table 1, and pebbles, water, and a binder were wet-mixed so as to obtain a mixture. Thereafter, hydrocarbon reforming catalysts of examples 9 to 11 were produced by using the same method as the method for producing the hydrocarbon reforming catalysts of examples 1 to 8.

The hydrocarbon reforming catalysts of examples 9 to 11 were catalysts satisfying the requirements of the present invention. As described in Table 1, the hydrocarbon reforming catalysts of examples 9 to 11 contained Ca, Zr, Ce, and Ru.

(Examples 12 to 14)

Regarding the material for forming the hydrocarbon reforming catalyst, $CaCO_3$, $ZrO_2$, $Y_2O_3$, and $RuO_2$ were prepared and weighed so that the molar ratio of Ca:Zr:Y:Ru was set to be equal to the ratio described in Table 1, and pebbles, water, and a binder were wet-mixed so as to obtain a mixture. Thereafter, hydrocarbon reforming catalysts of examples 12 to 14 were produced by using the same method as the method for producing the hydrocarbon reforming catalysts of examples 1 to 8.

The hydrocarbon reforming catalysts of examples 12 to 14 were catalysts satisfying the requirements of the present invention. As described in Table 1, the hydrocarbon reforming catalysts of examples 12 to 14 contained Ca, Zr, Y, and Ru.

(Example 15)

Regarding the material for forming the hydrocarbon reforming catalyst, $CaCO_3$, $ZrO_2$, and $RuO_2$ were prepared and weighed so that the molar ratio of Ca:Zr:Ru was set to be equal to the ratio described in Table 1, and pebbles, water, and a binder were wet-mixed so as to obtain a mixture. Thereafter, a hydrocarbon reforming catalyst of example 15 was produced by using the same method as the method for producing the hydrocarbon reforming catalysts of examples 1 to 8.

The hydrocarbon reforming catalyst of example 15 was a catalyst satisfying the requirements of the present invention. As described in Table 1, the hydrocarbon reforming catalyst of example 15 contained Ca, Zr, and Ru.

(Comparative example 1)

Regarding the material for forming the hydrocarbon reforming catalyst, $CaCO_3$, $CeO_2$, and $RuO_2$ were prepared and weighed so that the molar ratio of Ca:Ce:Ru was set to be equal to the ratio described in Table 1, and pebbles, water, and a binder were wet-mixed so as to obtain a mixture. Thereafter, a hydrocarbon reforming catalyst of comparative example 1 was produced by using the same method as the method for producing the hydrocarbon reforming catalysts of examples 1 to 8.

The hydrocarbon reforming catalyst of comparative example 1 was a catalyst not satisfying the requirements of the present invention. As described in Table 1, the hydrocarbon reforming catalyst of comparative example 1 contained Ca, Ce, and Ru but contained neither Zr nor Y.

(Comparative example 2)

Regarding the material for forming the hydrocarbon reforming catalyst, $CaCO_3$, $ZrO_2$, and $RuO_2$ were prepared and weighed so that the molar ratio of Ca:Zr:Ru was set to be equal to the ratio described in Table 1, and pebbles, water, and a binder were wet-mixed so as to obtain a mixture. The molar ratio of Ca:Zr:Ru in the resulting mixture was equal to the molar ratio of Ca:Zr:Ru of the materials used for producing the hydrocarbon reforming catalyst of example 15. Thereafter, a hydrocarbon reforming catalyst of comparative example 2 was produced by using the same method as the method for producing the hydrocarbon reforming catalyst of example 15 except that the firing temperature was set to be 600°C. The hydrocarbon reforming catalyst of comparative example 2 was a catalyst not satisfying the requirements of the present invention.

(Comparative example 3)

Regarding the material for forming the hydrocarbon reforming catalyst, $CaCO_3$, $ZrO_2$, $CeO_2$, $Y_2O_3$, and $RuO_2$ were prepared and weighed so that the molar ratio of Ca:Zr:Ce:Y:Ru was set to be equal to the ratio described in Table 1, and pebbles, water, and a binder were wet-mixed so as to obtain a mixture. The molar ratio of Ca:Zr:Ce:Y:Ru in the resulting mixture was equal to the molar ratio of Ca:Zr:Ce:Y:Ru of the materials used for producing the hydrocarbon reforming catalyst of example 5. Thereafter, a hydrocarbon reforming catalyst of comparative example 3 was produced by using the same method as the method for producing the hydrocarbon reforming catalyst of example 5 except that the firing temperature was set to be 600°C. The hydrocarbon reforming catalyst of comparative example 3 was a catalyst not satisfying the requirements of the present invention.

<Examination of crystal phase>

The hydrocarbon reforming catalysts of examples 1 to 15 and comparative examples 1 to 3 above were pulverized by using a mortar, and the crystal phase was examined by powder XRD measurement. Regarding the powder XRD measurement, Cu-K$\alpha$1 was used as the X-ray.

Table 1 describes the crystal phase and the composition (molar ratio) examined with respect to the hydrocarbon reforming catalysts of examples 1 to 15 and comparative examples 1 to 3.

[Table 1]

| Catalyst | Crystal phase | Molar ratio | | | | |
|---|---|---|---|---|---|---|
| | | Ca | Zr | Ce | Y | Ru |
| Example 1 | $CaZrO_3$, CaO, $CeO_2$ | 1.00 | 0.60 | 0.30 | 0.10 | 0.01 |
| .Example 2 | $CaZrO_3$, CaO, $CeO_2$ | 1.00 | 0.60 | 0.30 | 0.10 | 0.30 |
| Example 3 | $CaZrO_3$, CaO, $CeO_2$ | 1.00 | 0.60 | 0.30 | 0.10 | 0.14 |
| Example 4 | $CaZrO_3$, CaO, $CeO_2$ | 1.00 | 0.60 | 0.30 | 0.10 | 0.29 |
| Example 5 | $CaZrO_3$, CaO, $CeO_2$ | 1.00 | 0.60 | 0.30 | 0.10 | 0.06 |
| Example 6 | $CaZrO_3$, CaO, $CeO_2$, $Y_2O_3$ | 1.00 | 0.40 | 0.30 | 0.30 | 0.06 |
| Example 7 | $CaZrO_3$, CaO, $CeO_2$ | 1.00 | 0.40 | 0.50 | 0.10 | 0.06 |
| Example 8 | $CaZrO_3$, CaO, $CeO_2$, $Y_2O_3$ | 1.00 | 0.20 | 0.50 | 0.30 | 0.06 |
| Example 9 | $CaZrO_3$, CaO, $CeO_2$ | 1.00 | 0.70 | 0.30 | - | 0.06 |
| Example 10 | $CaZrO_3$, CaO, $CeO_2$ | 1.00 | 0.50 | 0.50 | - | 0.06 |
| Example 11 | $CaZrO_3$, CaO, $CeO_2$ | 1.00 | .020 | 0.80 | - | 0.07 |
| Example 12 | $CaZrO_3$ | 1.00 | 0.90 | - | 0.10 | 0.05 |
| Example 13 | $CaZrO_3$, CaO, $Y_2O_3$ | 1.00 | 0.70 | - | 0.30 | 0.05 |

(continued)

| Catalyst | Crystal phase | Molar ratio | | | | |
|---|---|---|---|---|---|---|
| | | Ca | Zr | Ce | Y | Ru |
| Example 14 | $CaZrO_3$, CaO, $Y_2O_3$ | 1.00 | 0.50 | - | 0.50 | 0.05 |
| Example 15 | $CaZrO_3$ | 1.00 | 1.00 | - | - | 0.05 |
| Comparative example 1 | CaO, $CeO_2$, $RuO_2$ | 1.00 | - | 1.00 | - | 0.07 |
| Comparative example 2 | $CaCO_3$, $ZrO_2$, $RuO_2$ | 1.00 | 1.00 | - | - | 0.05 |
| Comparative example 3 | $CaCO_3$, $ZrO_2$, $CeO_2$, $Y_2O_3$, $RuO_2$ | 1.00 | 0.60 | 0.30 | 0.10 | 0.06 |

Regarding the hydrocarbon reforming catalysts of examples 1 to 15, it was ascertained that a crystal phase of a complex oxide having a perovskite structure, specifically, a crystal phase containing $CaZrO_3$ as a primary component was present.

In addition, regarding hydrocarbon reforming catalysts of some examples, heterogeneous phases such as CaO, $CeO_2$, and $Y_2O_3$ were also observed in accordance with the composition ratio. However, even in these hydrocarbon reforming catalysts, the main crystal phase of the complex oxide having a perovskite structure was a crystal phase containing $CaZrO_3$ as a primary component.

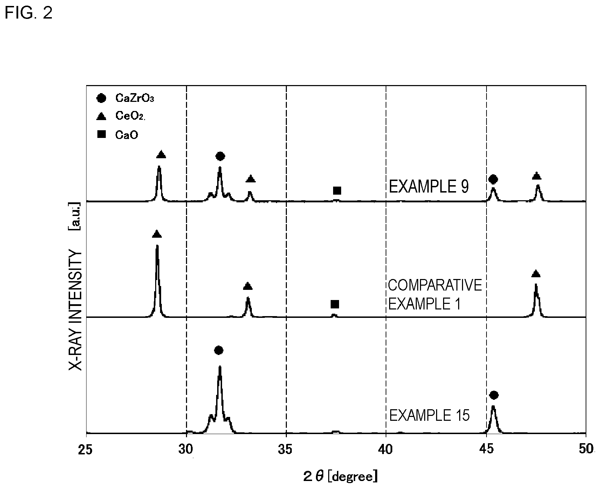

Fig. 2 illustrates X-ray diffraction patterns of the hydrocarbon reforming catalysts of examples 9 and 15 and comparative example 1. As illustrated in Fig. 2, it can be ascertained that a crystal phase attributed to $CaZrO_3$ is present in the hydrocarbon reforming catalysts of examples 9 and 15. In addition, it can be ascertained that diffraction lines attributed to CaO and $CeO_2$ are observed regarding the hydrocarbon reforming catalyst of example 9. On the other hand, no diffraction lines attributed to $RuO_2$ and Ru simple substance are observed regarding these hydrocarbon reforming catalysts.

That is, in the hydrocarbon reforming catalysts of examples 9 and 15, Ru is present in the structure of a crystal phase containing $CaZrO_3$ as a primary component. In other words, Ru is present as a component constituting a complex oxide having a perovskite structure.

Likewise, Ru is present as a component constituting a complex oxide having a perovskite structure in the hydrocarbon reforming catalysts of examples 10 and 11. Regarding the hydrocarbon reforming catalysts of examples 1 to 8 and 12 to 14 in which Y and Ru are contained in a complex oxide, each of Y and Ru is present as a component constituting the complex oxide having a perovskite structure.

On the other hand, it was ascertained that the hydrocarbon reforming catalyst of comparative example 2 was a mixture of $CaCO_3$, $ZrO_2$, and $RuO_2$ which were used for preparation since the firing temperature during production was 600°C which was lower than the formation temperature of the complex oxide having a perovskite structure. Likewise, it was ascertained that the hydrocarbon reforming catalyst of comparative example 3 was also a mixture of $CaCO_3$, $ZrO_2$, $CeO_2$, $Y_2O_3$, and $RuO_2$ which were used for preparation.

<Examination of composition>

Each of the hydrocarbon reforming catalysts of examples 1 to 15 and the hydrocarbon reforming catalysts of comparative examples 1 to 3 was finely pulverized by using a mortar, and the resulting powder was subjected to composition analysis by X-ray fluorescence analysis (XRF analysis). As a result, it was ascertained that regarding all the hydrocarbon reforming catalysts subjected to the composition analysis, the element molar ratio of the formulation for weighing was maintained and a change in the element molar ratio, such as reduction in each component due to heating and firing treatment, did not occur.

In this regard, in the hydrocarbon reforming catalysts of examples 1 to 15, the molar ratio of Ru to Ca was 0.01 or more and 0.29 or less.

<Evaluation of reforming>

The hydrocarbon reforming catalyst of each of examples 1 to 15 and comparative examples 1 to 3 was pulverized and classified into the size of 0.5 mm to 0.7 mm. Thereafter, a steam reforming evaluation test of a propane gas which is a hydrocarbon-based gas was performed by using the following method. However, the hydrocarbon-based gas is not limited to the propane gas.

The pipe 1 of the hydrocarbon reforming apparatus 100 illustrated in Fig. 1 was filled with 0.3 g of hydrocarbon reforming catalyst produced by using the above-described method, and heating at 600°C was performed in the heating portion 2. Subsequently, a raw material gas was introduced from the gas feed pipe 4 at a flow rate of nitrogen ($N_2$) of 350 cc/min, propane ($C_3H_8$) of 7 cc/min, steam ($H_2O$) of 60 cc/min, and carbon dioxide ($CO_2$) of 60 cc/min.

The raw material gas introduced into the pipe 1 was reformed, and a synthetic gas containing hydrogen and carbon monoxide was discharged from the gas discharge pipe 5. The synthetic gas discharged from the gas discharge pipe 5 was introduced into a gas analyzer (gas chromatograph) after moisture was removed by a cooling-type trap, and a hydrogen concentration was measured.

Herein, as a result of calculation of the equilibrium gas composition at the above-described conditions of the gas partial pressure and the temperature, the hydrogen gas concentration percentage in an equilibrium state was 8.1% by volume except for moisture. Therefore, when the reaction of the introduced raw material gas progresses 100%, the concentration of hydrogen in an equilibrium state (hereafter referred to as an equilibrium hydrogen concentration) discharged from the gas discharge pipe 5 is 8.1% by volume.

(I) Examination of initial activity

It was assumed that no sulfur component was present for the first 1 hour from introduction of the raw material gas, and the hydrogen concentration after 1 hour (initial hydrogen concentration) was measured so as to examine the initial activity of the hydrocarbon reforming catalyst. Table 2 describes the concentration of hydrogen discharged from the gas discharge pipe 5 (initial hydrogen concentration) and the equilibrium achievement percentage of the initial activity when the hydrocarbon reforming catalyst of each of the examples and the comparative examples was used. The equilibrium achievement percentage of the initial activity was defined by formula (3) below.

```
equilibrium achievement percentage of initial activity

= initial hydrogen concentration/equilibrium hydrogen

concentration × 100      (3)
```

(II) Examination of characteristics after deterioration due to sulfur

After the above-described initial activity was examined, a $SO_2$ gas was mixed so that the proportion was set to be 50 ppm relative to the total flow rate of the raw material gas of 477 cc/min, the hydrogen gas concentration after 1 hour was measured so as to examine deterioration in the catalyst activity in the presence of sulfur. As a result, regarding all the hydrocarbon reforming catalysts of examples 1 to 15 and comparative examples 1 to 3, the hydrogen concentration was 0 or a very low value.

(III) Examination of characteristics after heat treatment

After the above-described characteristics after deterioration due to sulfur were examined, the hydrocarbon reforming catalyst was heated to 800°C while a mixture gas not containing a hydrocarbon-based gas was, specifically a flow rate of 350 cc/min of nitrogen ($N_2$), 60 cc/min of steam ($H_2O$), and 60 cc/min of carbon dioxide ($CO_2$) were, introduced into the pipe 1, and heat treatment was successively performed for 1 hour at 800°C. Thereafter, the temperature was lowered to 600°C, and a flow rate of 350 cc/min of nitrogen ($N_2$), 7 cc/min of propane ($C_3H_8$), 60 cc/min of steam ($H_2O$), and 60 cc/min of carbon dioxide ($CO_2$) were introduced again, and the hydrogen concentration after 1 hour was measured so as to examine the activity of the hydrocarbon reforming catalyst after heat treatment.

Table 2 describes the concentration of hydrogen discharged from the gas discharge pipe 5 and the equilibrium achievement percentage when the hydrocarbon reforming catalyst of each of the examples and the comparative examples was used. In Table 2, these are expressed as the hydrogen concentration "After heat treatment" and "Equilibrium achievement percentage after heat treatment". The equilibrium achievement percentage after heat treatment was defined by formula (4) below.

```
equilibrium achievement percentage after heat treatment

= hydrogen concentration after heat treatment/equilibrium

hydrogen concentration × 100    (4)
```

After the test was completed, to examine presence or absence of carbon deposition, the hydrocarbon reforming catalyst was cooled and removed in a $N_2$ atmosphere, and a change in the weight of the catalyst due to carbon combustion was examined by TG-DTA (thermogravimetric-differential thermal analysis). As a result, regarding all the hydrocarbon reforming catalysts of the examples and comparative examples subjected to the evaluation, carbon deposition was not observed.

[Table 2]

| Catalyst | Hydrogen concentration (% by volume) | | Equilibrium achievement percentage of initial activity | Equilibrium achievement percentage after heat treatment |
| --- | --- | --- | --- | --- |
| | Initial stage | After heat treatment | | |
| Example 1 | 4.2 | 3.8 | 52% | 47% |
| Example 2 | 6.5 | 6.5 | 80% | 80% |
| Example 3 | 8.0 | 8.1 | 99% | 100% |
| Example 4 | 8.1 | 8.1 | 100% | 100% |
| Example 5 | 7.3 | 7.0 | 90% | 87% |
| Example 6 | 7.4 | 7.7 | 91% | 95% |
| Example 7 | 7.8 | 7.8 | 96% | 96% |
| Example 8 | 8.0 | 2.6 | 99% | 32% |
| Example 9 | 7.9 | 6.9 | 97% | 85% |
| Example 10 | 7.6 | 7.0 | 94% | 86% |
| Example 11 | 4.7 | 2.5 | 58% | 31% |
| Example 12 | 7.1 | 6.5 | 88% | 80% |
| Example 13 | 7.3 | 7.2 | 90% | 89% |
| Example 14 | 6.8 | 5.0 | 84% | 62% |
| Example 15 | 2.8 | 5.9 | 34% | 73% |
| Comparative example 1 | 0.5 | 1.8 | 6% | 22% |
| Comparative example 2 | 1.5 | 3.0 | 19% | 37% |
| Comparative example 3 | 1.0 | 2.0 | 12% | 25% |

<Initial activity>

As described in Table 2, when the hydrocarbon reforming catalysts of examples 1 to 15 satisfying the requirements of the present invention were used, the equilibrium achievement percentage of the initial activity was 34% or more. On the other hand, when the hydrocarbon reforming catalysts of comparative examples 1 to 3 not satisfying the requirements of the present invention were used, the equilibrium achievement percentage of the initial activity was 19% or less and was a low value.

The reason for the hydrocarbon reforming catalyst satisfying the requirements of the present invention having high initial activity is as described below. That is, it is conjectured that the hydrocarbon reforming catalyst is stabilized by the Ru component in a solid solution state being dispersed in the complex oxide having a crystal phase containing $CaZrO_3$ as a primary component and having a perovskite structure, aggregation and vaporization of the Ru component under a high-temperature oxidizing condition can be suppressed from occurring, and, as a result, the activity is improved.

In this regard, of the hydrocarbon reforming catalysts satisfying the requirements of the present invention, when the hydrocarbon reforming catalysts of examples 1 to 14, in which the complex oxide further contained at least one of Ce and Y, were used, the equilibrium achievement percentage of the initial activity was 52% or more and was a high value. Therefore, regarding the hydrocarbon reforming catalyst satisfying the requirements of the present invention, it is favorable that the complex oxide further contain at least one of Ce and Y.

In addition, of the hydrocarbon reforming catalysts satisfying the requirements of the present invention, when the hydrocarbon reforming catalysts of examples 2 to 8, in which the complex oxide further contained Ce and Y and in which the molar ratio of Ru to Ca of 0.03 or more and 0.29 or less, were used, the equilibrium achievement percentage of the initial activity was 80% or more and was a high value. Therefore, regarding the hydrocarbon reforming catalyst satisfying the requirements of the present invention, it is favorable that the complex oxide further contain Ce and Y and that the molar ratio of Ru to Ca be 0.03 or more and 0.29 or less.

In addition, of the hydrocarbon reforming catalysts satisfying the requirements of the present invention, when the hydrocarbon reforming catalysts of examples 9 to 11, in which the complex oxide further contained Ce but did not contain Y, were used, the equilibrium achievement percentage of the initial activity was 58% or more and was a high value. Therefore, regarding the hydrocarbon reforming catalyst satisfying the requirements of the present invention, it is favorable that the complex oxide further contain Ce but not contain Y.

In addition, of the hydrocarbon reforming catalysts satisfying the requirements of the present invention, when the hydrocarbon reforming catalysts of examples 12 to 14, in which the complex oxide further contained Y but did not contain Ce, were used, the equilibrium achievement percentage of the initial activity was 84% or more and was a high value. Therefore, regarding the hydrocarbon reforming catalyst satisfying the requirements of the present invention, it is favorable that the complex oxide further contain Y but not contain Ce.

<Recovery from deterioration due to sulfur by heating>

As described above, when a sulfur component is contained in the raw material gas, the catalyst activity is deteriorated. However, as described in Table 2, regarding the hydrocarbon reforming catalysts satisfying the requirements of the present invention, the equilibrium achievement percentage after heat treatment was 31% or more. That is, it was found that even when the catalyst activity was deteriorated due to sulfur, the catalyst activity was recovered by heat treatment. Therefore, even when the hydrocarbon reforming catalyst satisfying the requirements of the present invention is used in an environment in which sulfur is present, continuous usage is possible by performing periodical heat treatment.

In this regard, although the specific reasons for the catalytic function deteriorated due to sulfur being recovered by heat treatment are not certain, it is conjectured that Ru in a solid solution state being dispersed in the complex oxide having a crystal phase containing $CaZrO_3$ as a primary component facilitates elimination of a sulfur component since the chemical state differs from that of just Ru or $RuO_2$. In addition, it is conjectured that Ru being present in the complex oxide enables high dispersion state to be maintained without aggregation and enables the catalyst activity to be maintained even when heating to 800°C is performed.

In this regard, since the recovery state after heat treatment differs in accordance with the amount of Y or Ce added, it is predicted that a certain amount of Y or Ce in a solid solution state being present in the $CaZrO_3$ structure also exerts an effect on the chemical state of Ru.

Herein, in the description above, the catalyst activity is recovered from deterioration due to sulfur by heating the hydrocarbon reforming catalyst at 800°C for 1 hour while a hydrocarbon gas is not present. However, the condition of 800°C and 1 hour is just an example, and the catalyst activity can be recovered by heating at a temperature of 700°C or higher for a predetermined time (for example, 5 min or more).

The present invention is not limited to the above-described embodiment and can be variously applied and modified within the scope of the present invention.

For example, the hydrocarbon reforming catalysts of the above-described examples take on granular forms. However, similarly to the common metal-supporting catalyst, a hydrocarbon reforming catalyst made into a powder may be supported by a ceramic or metal base material and be used. Alternatively, a catalyst powder may be formed by a method of press molding, extrusion molding, or the like without using a base material and be used in the form of a pellet, a ring, a honeycomb, or the like.

Reference Signs List

1    pipe
2    heating portion
3    hydrocarbon reforming catalyst
4    gas feed pipe
5    gas discharge pipe
6    hydrocarbon supply source

7      hydrogen outlet
100    hydrocarbon reforming apparatus

**Claims**

1. A hydrocarbon reforming catalyst used for forming a synthetic gas containing hydrogen and carbon monoxide from a hydrocarbon-based gas, the hydrocarbon reforming catalyst comprising:

   a complex oxide having a perovskite structure,
   wherein the complex oxide has a crystal phase containing $CaZrO_3$ as a primary component and contains Ru.

2. The hydrocarbon reforming catalyst according to Claim 1, wherein the molar ratio of Ru to Ca is 0.01 or more and 0.29 or less.

3. The hydrocarbon reforming catalyst according to Claim 1 or Claim 2, wherein the complex oxide further contains at least one of Ce and Y.

4. The hydrocarbon reforming catalyst according to Claim 1 or Claim 2, wherein the complex oxide further contains Y.

5. The hydrocarbon reforming catalyst according to Claim 4, wherein the complex oxide further contains Ce.

6. The hydrocarbon reforming catalyst according to Claim 5, wherein the molar ratio of Ru to Ca is 0.03 or more and 0.29 or less.

7. The hydrocarbon reforming catalyst according to Claim 4, wherein the complex oxide does not contain Ce.

8. The hydrocarbon reforming catalyst according to Claim 1 or Claim 2, wherein the complex oxide contains Ce but does not contain Y.

9. A hydrocarbon reforming apparatus comprising:

   a pipe through which a treatment object gas containing at least a hydrocarbon passes; and
   the hydrocarbon reforming catalyst according to any one of Claims 1 to 8 disposed at a position in contact with the treatment object gas inside the pipe.

10. A method for recovering a hydrocarbon reforming catalyst from deterioration due to sulfur, which is a method for recovering the activity of the hydrocarbon reforming catalyst deteriorated due to sulfur, the method comprising the step of:

    heating the hydrocarbon reforming catalyst according to any one of Claims 1 to 8 at a temperature of 700°C or higher for a predetermined time while a hydrocarbon-based gas is not present.

FIG. 1

FIG. 2

| | INTERNATIONAL SEARCH REPORT | International application No. |
|---|---|---|
| | | PCT/JP2020/041148 |

**A. CLASSIFICATION OF SUBJECT MATTER**
Int. Cl. B01J23/63(2006.01)i, B01J23/58(2006.01)i, B01J23/96(2006.01)i,
B01J38/02(2006.01)i, B01J38/06(2006.01)i, C01B3/40(2006.01)i
FI: B01J23/63 M, B01J23/58 M, C01B3/40, B01J23/96 M, B01J38/02, B01J38/06
According to International Patent Classification (IPC) or to both national classification and IPC

**B. FIELDS SEARCHED**

Minimum documentation searched (classification system followed by classification symbols)
Int. Cl. B01J21/00-38/74, C01B3/40

Documentation searched other than minimum documentation to the extent that such documents are included in the fields searched
Published examined utility model applications of Japan    1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
GAplus/REGISTRY (STN); JSTPlus /JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | RUOCCO, Concetta et al. Methane dry reforming on Ru perovskites. AZrRuO3: Influence of preparation method and substitution of A cation with alkaline earth metals. Journal of CO2 Utilization. 25 February 2019, vol. 30, pp. 222-231, <DOI:10.1016/j.jcou.2019.02.009> abstract, 2.1., 3.1., 3.3., fig. 5 | 1, 2, 9<br>10<br>3-8 |
| Y | JP 2008-94681 A (IDEMITSU KOSAN CO., LTD.) 24 April 2008, claims 1, 9-11, paragraph [0023], example 1 | 10 |
| A | JP 2010-29846 A (MURATA MANUFACTURING CO., LTD.) 12 February 2010, claims 1-3, table 1 | 1-10 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15.12.2020 | 28.12.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2020/041148 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-346598 A (NISSAN MOTOR CO., LTD.) 28 December 2006, claims 1, 2, paragraph [0028] | 1-10 |

Form PCT/ISA/210 (continuation of second sheet) (January 2015)

## INTERNATIONAL SEARCH REPORT
Information on patent family members

International application No.

PCT/JP2020/041148

| Patent Documents referred to in the Report | Publication Date | Patent Family | Publication Date |
|---|---|---|---|
| JP 2008-94681 A | 24.04.2008 | (Family: none) | |
| JP 2010-29846 A | 12.02.2010 | (Family: none) | |
| JP 2006-346598 A | 28.12.2006 | (Family: none) | |

Form PCT/ISA/210 (patent family annex) (January 2015)

**EP 4 056 268 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8231204 A
- JP 9168740 A
- JP 2006346598 A
- JP 2015136668 A